# EUROPÄISCHE PATENTSCHRIFT

(11) **EP 2 813 734 B1**
(45) Veröffentlichungstag und Bekanntmachung des Hinweises auf die Patenterteilung: **11.07.2018**
(21) Anmeldenummer: 14169103.0
(22) Anmeldetag: 20.05.2014
(51) Int. Cl.: F16H 61/02, F16H 61/04, B60W 30/19, F16H 63/50, B60K 6/48

(54) **Verfahren und Vorrichtung zur Steuerung eines Schaltgetriebes**
Method and device for controlling a transmission
Procédé et dispositif de commande d'une boîte de vitesses

(30) Priorität: 14.06.2013 DE 102013010013
(43) Veröffentlichungstag der Anmeldung: 17.12.2014
(73) Patentinhaber: Volkswagen Aktiengesellschaft, 38440 Wolfsburg (DE)
(72) Erfinder: Zillmer, Michael, 38173 Sickte (DE); Prochazka, David, 38448 Wolfsburg (DE); Fugel, Markus, 38114 Braunschweig (DE); Rieling, Jörg, 38116 Braunschweig (DE)

(56) Entgegenhaltungen:
- EP-A2- 2 457 794
- DE-A1-102007 055 830
- DE-A1-102008 031 456
- DE-A1-102008 032 768
- DE-A1-102011 117 853

## Beschreibung

Die Erfindung betrifft ein Verfahren und eine Vorrichtung zur Steuerung eines Schaltgetriebes in einem Elektro- oder Hybridfahrzeug.

Elektrische Antriebe können zur Erhöhung eines Raddrehmoments u.a. im Anfahrbereich unter Beibehaltung oder Steigerung der Fahrzeuggeschwindigkeit mit einem Mehrgang-Schaltgetriebe gekoppelt werden. In Hybrid- und Plug-in-Hybridantriebe werden elektrische Antriebe ebenfalls mit Mehrgang-Schaltgetrieben gekoppelt, z.B. in Parallelhybridantrieb-Fahrzeugen.

Eine Kopplung von elektrischen Antrieben und einem Schaltgetriebe kann auch zur Effizienzsteigerung eingesetzt werden, um in einem dynamischen Betrieb des Fahrzeugs unter Berücksichtigung von Getriebeverlusten einen wirkungsgradmäßig besten Betriebspunkt des elektrischen Antriebs einzustellen.

Die DE 10 2008 032 768 A1 offenbart ein Verfahren zur Ansteuerung eines Antriebsaggregats eines Kraftfahrzeugs mit automatischem Schaltgetriebe im Fall eines Schaltvorgangs von einem Anfangsgang, in dem das Antriebsaggregat bei einer Anfangsantriebsdrehzahl ein Anfangsantriebsmoment liefert, in einen Zielgang, in dem das Antriebsaggregat bei einer Zielantriebsdrehzahl ein Zielantriebsmoment liefert. Um Momentensprünge während des Schaltvorganges vollständiger zu vermeiden, wird neben einem ersten Korrekturmoment, welches sich aus bekannten Übersetzungsverhältnissen des Anfangsgangs und des Zielgangs berechnet, ein Zusatzmoment berechnet und berücksichtigt.

Die DE 10 2011 117 853 A1 offenbart einen neuen elektrischen Antrieb sowie ein Verfahren zur Steuerung des Antriebes, sodass ein Getriebestufenwechsel mit übergangslosem Verlauf des Drehmoments an der Ausgangswelle bei rein elektrischen oder maßgeblich elektrischen Antrieben ermöglicht wird. Der gelehrte elektrische Antrieb umfasst mindestens zwei elektrische Antriebsmittel.

Die DE 10 2008 031 456 A1, welche alle Merkmale des Oberbegriffs des Anspruchs 1 und des Anspruchs 9 zeigt, offenbart ein Lastschaltgetriebe zwischen einer Antriebswelle und einer Abtriebswelle. In einem solchen Lastschaltgetriebe erfordern Schaltungen zwischen zwei geraden Gängen oder zwei ungeraden Gängen eine Lastunterbrechung an der in beiden Gängen beteiligten Lastschaltkupplung. Es wird gelehrt, dass, wenn während so einer Schaltung der Elektromotor über das Überlagerungsgetriebe auf den Abtrieb wirkt, auch während einer solchen Schaltung ein gewisses Maß an Zugkraft an den Antriebsrädern besteht. Hierbei können Elektromotoren kurzzeitig stark überbelastet werden, wodurch eine Schaltung ohne Zugkraftunterbrechung ermöglicht wird.

Die DE 10 2007 055 830 A1 offenbart ein Verfahren und eine Vorrichtung zum Betrieb eines Hybridantriebs eines Fahrzeugs. Hierbei wird, ausgehend von einer elektromotorischen Fahrt bei offener Kupplung, zum Start des Verbrennungsmotors mittels der elektrischen Maschine während einer Lastschaltung eine Ansteuerung der elektrischen Maschine zur Erzeugung eines reduzierten dynamischen Drehmomentverlaufs am Eingang des Lastschaltgetriebes durch eine Ansteuerung der Kupplung mit einem auf den Verbrennungsmotor wirksamen und vom Betrag her inversen dynamischen Drehmomentverlauf substituiert.

Die EP 2 457 794 A2 offenbart ein Verfahren zum Betreiben eines Antriebsstranges mit einem Verbrennungsmotor und einem automatischen Schaltgetriebe, wo bei der Zughoch- bzw. Zugrückschaltung während Änderung der Übertragungsfähigkeit eines zu- bzw. wegschaltenden reibschlüssigen Schaltelements das vom Verbrennungsmotor bereitgestellte Moment reduziert wird. Somit sollen die Verlustmomente und Verschleiß an den Schaltelementen verringert werden. Wenn der Antriebsstrang zusätzlich eine elektrische Maschine aufweist, die das Kraftfahrzeug antreiben kann, ohne das Antriebsdrehmoment über die an der Schaltung beteiligten Schaltelemente dabei zu übertragen, kann diese die erwähnte Reduktion des Antriebsmoments zumindest teilweise kompensieren.

Es stellt sich das technische Problem, ein Verfahren und eine Vorrichtung zur Steuerung eines Schaltgetriebes in einem Elektro- oder Hybridfahrzeug zu schaffen, welche ein komfortableres Fahrgefühl ermöglichen und gleichzeitig ein gewünschtes Betriebsverhalten insbesondere der Elektromaschine gewährleistet wird.

Vorgeschlagen wird ein Verfahren zur Steuerung eines Schaltgetriebes in einem Elektro- oder Hybridfahrzeug. Das Schaltgetriebe kann hierbei ein Lastschaltgetriebe sein. Verschiedene Ausbildungen des Schaltgetriebes sind möglich. Beispielsweise kann das Schaltgetriebe als ein so genanntes Doppelkupplungsgetriebe ausgebildet sein.

Das Schaltgetriebe ist eingangsseitig mit einer Elektromaschine des Elektro- oder Hybridfahrzeugs gekoppelt. Beispielsweise kann eine Abtriebswelle der Elektromaschine mit einer Eingangswelle des Getriebes wirkverbunden sein. Die Elektromaschine bildet somit ein Antriebsaggregat des Elektro- oder Hybridfahrzeugs. Ist das Fahrzeug als Hybridfahrzeug ausgebildet, so kann das Fahrzeug ein Parallel-Hybridfahrzeug sein.

Weiter ist das Schaltgetriebe ausgangsseitig mit einer Antriebswelle des Elektro- oder Hybridfahrzeugs gekoppelt. Über die Antriebswelle kann das Schaltgetriebe mit antreibbaren Rädern des Elektro- oder Hybridfahrzeugs wirkverbunden werden. Insbesondere können über die Antriebswelle Drehmomente übertragen werden.

Das Schaltgetriebe umfasst mindestens zwei Schaltstufen oder Gänge mit voneinander verschiedenen Übersetzungsstufen oder -verhältnissen. In einem Schaltvorgang kann zwischen den mindestens zwei Schaltstufen umgeschaltet werden. Ein Hochschalten bezeichnet hierbei einen Schaltvorgang, bei dem auf eine Schaltstufe mit einer niedrigeren Übersetzungsstufe umgeschaltet wird. Dementsprechend bezeichnet ein Herunterschalten einen Schaltvorgang, bei dem auf eine Schaltstufe mit einer höheren Übersetzungsstufe umgeschaltet wird.

Weiter wird ein gewünschter Schaltvorgang detektiert. Beispielsweise kann ein manuell durchgeführter Schaltvorgang detektiert werden, beispielsweise wenn ein Kraftfahrzeugführer eine Position eines Ganghebels ändert. Auch kann ein automatisch durchgeführter Schaltvorgang detektiert werden, beispielsweise in Abhängigkeit eines Signals zur Ansteuerung eines Mittels zur Durchführung des Schaltvorgangs.

Selbstverständlich ist auch die Auswertung weiterer und/oder alternativer Kriterien zur Detektion eines gewünschten Schaltvorgangs möglich.

Wesentlich ist, dass zeitlich vor der Durchführung des Schaltvorgangs der zukünftige oder geplante Schaltvorgang detektiert wird.

Weiter wird ein aktueller Arbeitspunkt der Elektromaschine bestimmt. Der Arbeitspunkt kann beispielsweise durch ein von der Elektromaschine aktuell erzeugtes Drehmoment und eine aktuelle Drehzahl der Elektromaschine beschrieben werden.

In Abhängigkeit des Arbeitspunkts kann ein Lastbereich der Elektromaschine bestimmt werden. Der Lastbereich bezeichnet einen Teilbereich der von der Elektromaschine erzeugbaren Leistung, beispielsweise bei einer aktuell eingestellten Drehzahl.

Beispielsweise kann eine von der Elektromaschine erzeugte Leistung bestimmt werden, wobei diese Leistung einem von mehreren, voneinander verschiedenen Leistungsbereichen zugeordnet werden kann.

Insbesondere können zwei Last- oder Leistungsbereich existieren, ein Volllastbereich und ein Teillastbereich. Der Volllastbereich bezeichnet hierbei einen Leistungsbereich, in welchem die Elektromaschine, z.B. bei der aktuell eingestellten Drehzahl, eine maximale Leistung erzeugt oder eine Leistung erzeugt, die größer als eine oder gleich einer vorbestimmte(n) Leistung ist, wobei die vorbestimmte Leistung um ein vorbestimmtes Maß, beispielsweise 10%, geringer als die maximale Leistung sein kann. Im Teillastbereich erzeugt die Elektromaschine eine Leistung, die kleiner als die maximale Leistung oder die vorbestimmte Leistung ist.

Weiter wird der Schaltvorgang zeitlich erst dann durchgeführt, wenn der Arbeitspunkt der Elektromaschine nicht oder nicht mehr in dem Volllastbereich liegt.

Die Durchführung des Schaltvorgangs ist also abhängig von einer von der Elektromaschine aktuell erzeugten Leistung.

Beispielsweise kann geprüft werden, ob der Arbeitspunkt der Elektromaschine im Volllastbereich liegt. Der Schaltvorgang wird zeitlich verzögert durchgeführt, wenn der Arbeitspunkt der Elektromaschine im Volllastbereich liegt. Der Schaltvorgang kann zeitlich sofort durchgeführt werden, wenn der Arbeitspunkt der Elektromaschine nicht im Volllastbereich liegt.

Hierdurch ergibt sich in vorteilhafter Weise, dass bei der Durchführung des Schaltvorgangs eine Leistungsreserve besteht, d.h., dass die von der Elektromaschine erzeugte Leistung bei der Einleitung des Schaltvorgangs und/oder während der Durchführung des Schaltvorgangs noch erhöht werden kann. Bei einer konstanten Drehzahl bedeutet dies zum Beispiel, dass ein von der Elektromaschine erzeugtes Drehmoment bei der Einleitung des Schaltvorgangs und/oder während des Schaltvorgangs noch erhöht werden kann. Dies wird nachfolgend näher erläutert.

Aufgrund der vorhandenen Leistungsreserve können durch den Schaltvorgang bedingte Leistungsänderungen oder während des Schaltvorgangs auftretende Leistungsänderungen in vorteilhafter Weise durch eine noch möglich Änderung, insbesondere Erhöhung, der von der Elektromaschine erzeugten Leistung kompensiert werden. Somit können für den Fahrzeugführer und/oder Fahrzeuginsassen wahrnehmbare Auswirkungen der Leistungsänderungen, z.B. ein nachfolgend noch näher erläutertes Rucken, minimiert oder vollständig kompensiert werden. Dies erhöht in vorteilhafter Weise den Fahrkomfort, wobei die Elektromaschine nicht überlastet werden muss.

In einer weiteren Ausführungsform wird zu Beginn des Schaltvorgangs und/oder während des Schaltvorgangs ein Drehmoment der Elektromaschine verändert, insbesondere erhöht. Hierbei kann insbesondere eine Drehzahl der Elektromaschine konstant bleiben. Der Beginn des Schaltvorgangs bezeichnet hierbei den Zeitpunkt der Einleitung des Schaltvorgangs. Während des Schaltvorgangs bezeichnet hierbei einen Zeitraum nach der Einleitung des Schaltvorgangs.

Befindet sich die Elektromaschine, insbesondere bei gegebener und konstant zu haltender Drehzahl, in dem vorhergehend erläuterten Teillastbereich, so kann das von der Elektromaschine erzeugte Drehmoment noch erhöht werden.

Die Erhöhung des Drehmoments kann insbesondere bei einer Hochschaltung vor dem Schaltvorgang, insbesondere bei einer Zug-Hochschaltung, also bei einem Hochschalten während einer Beschleunigung des Elektro- oder Hybridfahrzeugs erfolgen. Weiter insbesondere kann das Verfahren bei einer Zug-Hochschaltung bei einer Beschleunigung durchgeführt werden, bei der die Elektromaschine vor dem Schaltvorgang im Volllastbereich betrieben wird.

Es ist bekannt, dass bei einer so genannten Momentenüberblendung, also bei der Verlagerung der Drehmomentübertragung von einer mechanischen Übertragungsstrecke einer Ausgangsschaltstufe auf eine mechanische Übertragungsstrecke der gewünschten Schaltstufe, insbesondere bei einer Zug-Hochschaltung, ein plötzliches Absinken des an einem antreibbaren Rad anliegenden Drehmoments, also des Raddrehmoments, auftritt. Dies ist durch die sich verringernde Übersetzungsstufe bedingt. Da durch den Schaltvorgang auch die Drehzahl verringert wird, kann das Drehmoment in der Regel nach dem Schaltvorgang wieder erhöht werden. Allerdings ist das durch das plötzliche Absinken des Drehmoments für den Fahrzeugführer und/oder weitere Fahrzeuginsassen wahrnehmbare Rucken störend.

In der vorgeschlagenen Ausführungsform wird das Absinken des Raddrehmoments durch das Erhöhen des Drehmoments der Elektromaschine verringert oder sogar vollständig verhindert. Hierdurch ergibt sich in vorteilhafter Weise die Erhöhung des Fahrkomforts, insbesondere kann ein als störend empfundenes Rucken, welches durch einen Schaltvorgang bedingt wird, verringert oder kompensiert werden.

In einer weiteren Ausführungsform wird das Drehmoment der Elektromaschine in Abhängigkeit einer Veränderung eines Abtriebsmoments des Schaltgetriebes verändert. Das Abtriebsdrehmoment des Schaltgetriebes bezeichnet hierbei das an der Antriebswelle des Fahrzeugs anliegende Drehmoment. Das vorhergehend erläuterte Raddrehmoment kann hierbei in Abhängigkeit des Abtriebsdrehmoments bestimmt werden. Insbesondere kann ein zeitlicher Verlauf des Drehmoments der Elektromaschine derart eingestellt werden, dass das Abtriebsmoment konstant ist oder sich nicht mehr als ein vorbestimmtes Maß, beispielsweise 10%, ändert.

Hierdurch ergibt sich in vorteilhafter Weise eine möglichst vollständige Kompensation des vorhergehend erläuterten Ruckens.

In einer weiteren Ausführungsform wird der Schaltvorgang nur dann durchgeführt, wenn die Elektromaschine in einem vorbestimmten Drehzahlbereich betrieben wird. Beispielsweise kann der Schaltvorgang so lange zeitlich verzögert werden, bis die Drehzahl der Elektromaschine größer als eine oder gleich einer minimalen Drehzahl des vorbestimmten Drehzahlbereichs ist oder kleiner als eine oder gleich einer maximalen Drehzahl des vorbestimmten Drehzahlbereichs ist.

Eine maximale Drehzahl des vorbestimmten Drehzahlbereichs kann hierbei kleiner, insbesondere um eine vorbestimmte Differenz kleiner, als eine maximal zulässige Drehzahl der Elektromaschine sein.

Der Drehzahlbereich kann schaltstufen- oder gangabhängig gewählt werden. Hierbei kann z.B. eine minimale Drehzahl und eine maximale Drehzahl des vorbestimmten Drehzahlbereichs mit ansteigender Übersetzungsstufe verringert werden. Hierdurch ergibt sich in vorteilhafter Weise, dass nach einem durchgeführten Schaltvorgang die maximale oder die nahezu maximale Leistung der Elektromaschine zur Verfügung steht.

In einer weiteren Ausführungsform wird der Schaltvorgang nur dann durchgeführt, wenn ein Drehmoment der Elektromaschine um mehr als ein vorbestimmtes Maß unterhalb eines maximalen Drehmoments liegt. Beispielsweise kann der Schaltvorgang so lange zeitlich verzögert werden, bis das Drehmoment kleiner als ein oder gleich einem Drehmoment ist, welches um das vorbestimmte Maß kleiner als das maximal erzeugbare Drehmoment ist.

Das vorbestimmte Maß kann hierbei abhängig von einem Verhältnis zwischen der Übersetzungsstufe einer aktuellen eingestellten Schaltstufe und der Übersetzungsstufe der durch den Schaltvorgang einzustellenden Schaltstufe gewählt werden. In Abhängigkeit dieses Verhältnis ergibt sich ein maximaler Betrag, um den sich das Drehmoment, insbesondere bei konstanter Drehzahl, bei der Momentenüberblendung ändern, insbesondere absinken, kann. Das vorbestimmte Maß kann hierbei gleich diesem Betrag oder größer als dieser Betrag gewählt werden.

Hierdurch ergibt sich in vorteilhafter Weise, dass eine ausreichend große Drehmomentreserve bei der Einleitung des Schaltvorgangs vorhanden ist, um maximal auftretende Drehmomentänderungen zu kompensieren.

In einer weiteren Ausführungsform wird der Schaltvorgang maximal für eine vorbestimmte Zeitdauer und/oder nur unterhalb einer vorbestimmten Maximaldrehzahl unterdrückt.

Übersteigt die Zeitdifferenz zwischen einem aktuellen Zeitpunkt und dem Zeitpunkt der gewünschten Einleitung des Schaltvorgangs, der beispielsweise gleich dem Zeitpunkt der Detektion des gewünschten Schaltvorgangs sein kann, die vorbestimmte Zeitdauer, so wird der Schaltvorgang trotz einer gegebenenfalls fehlenden Leistungs- oder Drehmomentreserve eingeleitet. Hierdurch können in vorteilhafter Weise Irritationen des Kraftfahrzeugführers darüber vermieden werden, dass ein gewünschter Schaltvorgang nicht durchgeführt wird.

Übersteigt die Drehzahl der Elektromaschine nach dem Zeitpunkt der gewünschten Einleitung des Schaltvorgangs die vorbestimmte Maximaldrehzahl, so kann der Schaltvorgang ebenfalls trotz gegebenenfalls fehlender Leistungs- oder Drehmomentreserve eingeleitet werden. Hierdurch können in vorteilhafter Weise insbesondere akustische Irritationen des Kraftfahrzeugführers vermieden werden, die sich durch eine erhöhende Drehzahl ergeben können. Auch können durch eine solche Zwangsschaltung in vorteilhafter Weise Arbeitspunkte mit niedrigen Wirkungsgraden der Elektromaschine vermieden werden.

In einer weiteren Ausführungsform wird der Schaltvorgang nur dann durchgeführt, wenn ein Wirkungsgrad der Elektromaschine, der sich bei Betrieb mit der gewünschten Übersetzungsstufe einstellt, um nicht mehr als ein vorbestimmtes Maß von dem Wirkungsgrad der Elektromaschine abweicht, der sich bei Betrieb mit der aktuellen Übersetzungsstufe zum Beginn des Schaltvorgangs einstellt oder eingestellt ist. Beispielsweise kann die Abweichung kleiner als das vorbestimmte Maß sein, wenn ein Verhältnis der Wirkungsgrade zwischen 0.9 und 1.1 liegt.

Beispielsweise kann der Schaltvorgang so lange zeitlich verzögert werden, bis das vorhergehend erläuterte Verhältnis der Wirkungsgrade einstellt.

Hierdurch ergibt sich in vorteilhafter Weise eine hohe Effizienz während des Antriebs des Elektro- oder Hybridfahrzeugs durch die Elektromaschine auch bei Schaltvorgängen.

In einer weiteren Ausführungsform wird das Verfahren sowohl in einem motorischen Betrieb der Elektromaschine als auch bei einem generatorischen Betrieb der Elektromaschine durchgeführt. In einem motorischen Betrieb wandelt die Elektromaschine elektrische Energie, die z.B. in einer Traktionsbatterie gespeichert ist, in mechanische Energie um. Im generatorischen Betrieb wandelt die Elektromaschine mechanische Energie, die beispielsweise aus der kinetischen Energie des Fahrzeugs erzeugt wird, in elektrische Energie um.

Wird das von der Elektromaschine erzeugte Drehmoment vorzeichensensitiv betrachtet, so weist das Drehmoment im motorischen Betrieb ein positives Vorzeichen und im generatorischen Betrieb ein negatives Vorzeichen auf. Im Falle eines generatorischen Betriebs entspricht der Volllastbereich also einem Leistungsbereich, der einen Arbeitspunkte umfasst, in welchem die Drehmaschine im generatorischen Betrieb eine maximale elektrische Leistung erzeugt. Beispielsweise kann der Schaltvorgang z.B. nur dann durchgeführt werden, wenn das aktuelle (negative) Drehmoment größer ist als ein, insbesondere bei der aktuellen Drehzahl, minimales Drehmoment.

Weiter vorgeschlagen wird eine Vorrichtung zur Steuerung eines Schaltgetriebes in einem Elektro- oder Hybridfahrzeug. Das Schaltgetriebe ist eingangsseitig mit einer Elektromaschine des Elektro- oder Hybridfahrzeugs gekoppelt, wobei das Schaltgetriebe ausgangsseitig mit einer Antriebswelle des Elektro- oder Hybridfahrzeugs gekoppelt ist. Die Vorrichtung umfasst mindestens ein Mittel zur Detektion eines gewünschten Schaltvorgangs, mindestens ein Mittel zur Betätigung des Schaltgetriebes und mindestens eine Steuer- und Auswerteeinrichtung. Das Mittel zur Betätigung des Schaltgetriebes kann ein manuell bedienbares Element, z.B. einen Schalthebel, umfassen. Alternativ oder kumulativ kann das Mittel zur Betätigung des Schaltgetriebes als Aktor ausgebildet sein, der z.B. eine automatische Durchführung des Schaltvorgangs ermöglicht.

Mittels des Mittels zur Detektion eines gewünschten Schaltvorgangs ist ein gewünschter Schaltvorgang detektierbar. Mittels der Steuer- und Auswerteeinrichtung ist ein aktueller Arbeitspunkt der Elektromaschine bestimmbar. Das mindestens eine Mittel zur Betätigung des Schaltgetriebes wird nur oder ausschließlich dann zur Durchführung des Schaltvorgangs angesteuert oder freigegeben, wenn der Arbeitspunkt der Elektromaschine nicht oder nicht mehr in einem Volllastbereich liegt.

Mittels des vorgeschlagenen Verfahrens ist in vorteilhafter Weise eines der vorhergehend erläuterten Verfahren durchführbar.

In einer weiteren Ausführungsform ist mittels der Steuer- und Auswerteeinrichtung zu Beginn des Schaltvorgangs und/oder während des Schaltvorgangs ein Drehmoment der Elektromaschine veränderbar, insbesondere erhöhbar. Dies kann insbesondere bei einer Zug-Hochschaltung, also beim Hochschalten während des Beschleunigen des Fahrzeugs erfolgen.

Die Erfindung wird anhand eines Ausführungsbeispiels näher erläutert. Die Figuren zeigen:
- Fig. 1: einen beispielhaften Drehzahl-Drehmomentverlauf bei einer Zug-Hochschaltung und
- Fig. 2a: eine schematische Darstellung eines Drehzahl- und Drehmomentverlauf bei einer Zug-Hochschaltung im Volllastbetrieb der Elektromaschine und
- Fig. 2b: eine schematische Darstellung eines Drehzahl- und Drehmomentverlauf bei einer Zug-Hochschaltung im Teillastbetrieb der Elektromaschine.

Nachfolgend bezeichnen gleiche Bezugszeichen Elemente mit gleichen oder ähnlichen technischen Merkmalen.

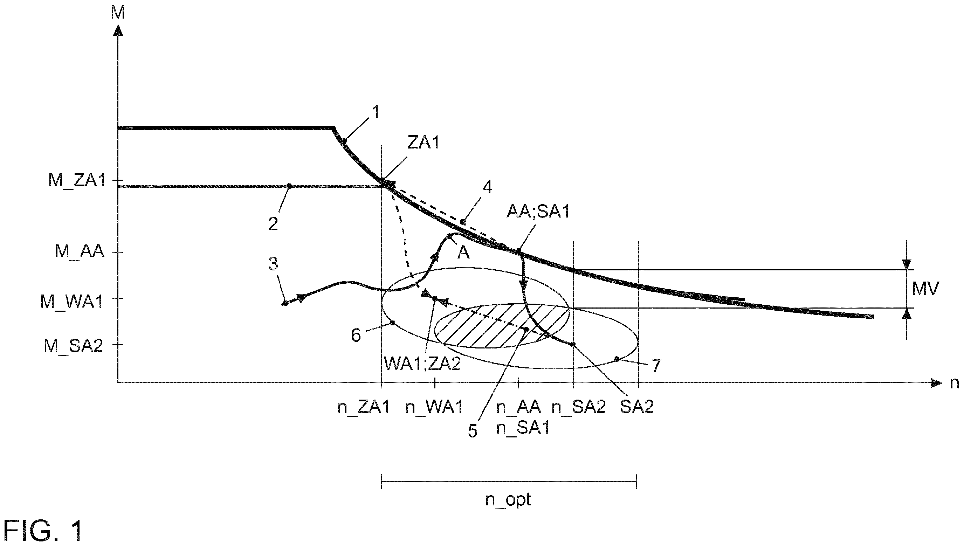

In Fig. 1 ist ein beispielhafter Drehzahl-Drehmomentverlauf bei einer Zug-Hochschaltung gemäß dem Stand der Technik und bei einer erfindungsgemäßen Zug-Hochschaltung dargestellt. Eine Zug-Hochschaltung bezeichnet das Umschalten von einer Schaltstufe mit einer ersten Übersetzungsstufe in eine Schaltstufe mit einer niedrigeren Übersetzungsstufe.

In Fig. 1 ist auf der x-Achse die Drehzahl n und auf der y-Achse das von einer elektrischen Maschine eines Elektro- oder Hybridfahrzeugs (nicht dargestellt) erzeugte Drehmoment M dargestellt.

In Fig. 1 ist eine Kennlinie 1 maximal erzeugbarer Leistung dargestellt, wenn im Schaltgetriebe beispielsweise ein 2. Gang eingelegt ist. Der 2. Gang entspricht hierbei einer Ausgangsschaltstufe. Weiter ist eine Kennlinie 2 maximal erzeugbarer Leistung dargestellt, wenn im Schaltgetriebe ein 3. Gang eingelegt ist. Der 3. Gang bezeichnet hierbei die gewünschte einzustellende Schaltstufe, wobei im 3. Gang eine Übersetzungsstufe kleiner als im 2. Gang ist.

Die maximal erzeugbare Leistung stellt hierbei die von der Elektromaschine erzeugbare und an das mindestens eine antreibbare Rad übertragbare Leistung dar. Abschnitte der Kennlinien 1, 2, in welchen die Elektromaschine konstante Leistung erzeugt, können auch als so genannten Leistungshyperbeln bezeichnet werden.

Ein Verlauf von sich einstellenden Arbeitspunkten der Elektromaschine ist durch eine durchgezogene Linie 3 dargestellt. Pfeile deuten hierbei einen zeitlichen Verlauf der Arbeitspunkte an. Die Arbeitspunkte werden hierbei durch Drehzahl n und Drehmoment M beschrieben. Hierbei ist dargestellt, dass die Arbeitspunkte anfangs in einem Teillastbereich der Elektromaschine liegen. Dies bedeutet, dass die Elektromaschine bei der aktuellen Drehzahl n nicht das maximal erzeugbare sondern ein im Vergleich zum maximal erzeugbaren Drehmoment M niedrigeres Drehmoment M erzeugt. Zeitlich nach einem Arbeitspunkt A bis zu einem Ausgangsarbeitspunkt AA wird die Elektromaschine im Volllastbereich betrieben. Das erzeugte Drehmoment M ist hierbei das bei einer Drehzahl n maximal erzeugbare Drehmoment M oder weicht nur um ein geringes Maß von diesem maximal erzeugbaren Drehmoment M ab.

Zum Ausgangsarbeitspunkt AA wird ein gewünschter Schaltvorgang detektiert, wobei vom 2. Gang in den 3. Gang hochgeschaltet werden soll.

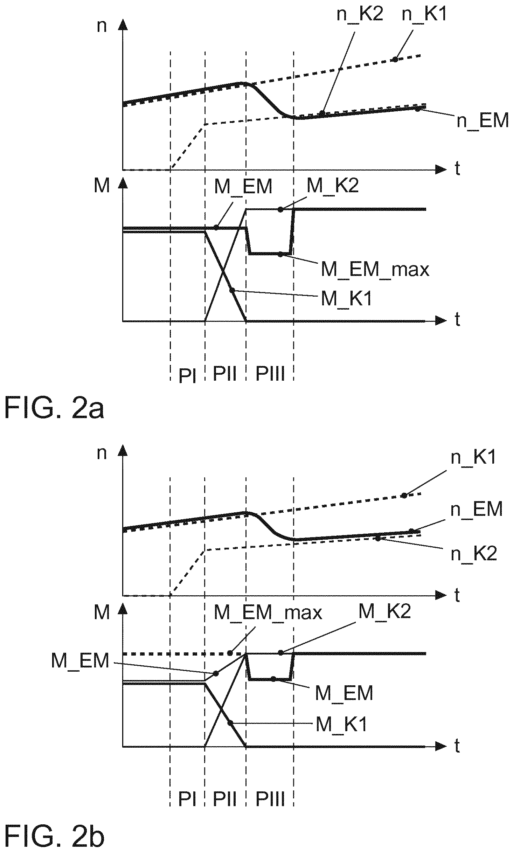

Ein Schaltvorgang gemäß dem Stand der Technik ist durch eine gestrichelte Linie 4 dargestellt. In dem Ausgangsarbeitspunkt AA wird die Elektromaschine unter Volllast betrieben. Dies bedeutet, dass das für die eingestellte Drehzahl n_AA maximale Drehmoment M_AA erzeugt wird. Der Ausgangsarbeitspunkt AA entspricht in dem gemäß dem Stand der Technik durchgeführten Schaltvorgang einem Schaltarbeitspunkt SA1. In diesem Schaltarbeitspunkt SA1 wird der Schaltvorgang eingeleitet. Wird nun der 3. Gang eingelegt, so erfolgt bei oder während einer Momentenüberführungsphase PII (siehe Fig. 2a) ein nicht dargestelltes Absinken des Raddrehmoments, welches an einem antreibbaren Rad des Elektro- oder Hybridfahrzeugs anliegt. Im 3. Gang stellt sich dann ein Zielarbeitspunkt ZA1 ein. In diesem ist die Drehzahl n_ZA1 geringer als die Drehzahl n_SA1 im Schaltarbeitspunkt SA1. Das Drehmoment M_ZA1 ist jedoch höher als im Schaltarbeitspunkt SA1. Allerdings wird die Elektromaschine auch im Zielarbeitspunkt ZA1 unter Volllast betrieben.

Weiter ist dargestellt, dass nach Erreichen des Zielarbeitspunkts ZA1 ein weiterer Arbeitspunkt WA1 eingestellt wird, der in einem Teillastbereich der Elektromaschine liegt. Hierbei liegt das erzeugte Drehmoment M_WA1 unter einem bei der eingestellten Drehzahl n_WA1 maximal erzeugbaren Drehmoment M.

Durch eine Strichpunktlinie 5 ist ein erfindungsgemäßer Schaltvorgang dargestellt. Dieser wird zu einem verzögerten Schaltarbeitspunkts SA2 eingeleitet. Der verzögerte Schaltarbeitspunkt SA2 stellt sich zeitlich nach dem Ausgangsarbeitspunkt AA ein. Insbesondere wird die Elektromaschine im verzögerten Schaltarbeitspunkt SA2 im Teillastbereich betrieben. Dargestellt ist ein Betrag MV eines Drehmomentvorhalts MV, der durch die Elektromaschine im verzögerten Schaltarbeitspunkt SA2 mindestens noch erzeugbar sein muss. Wie in Fig. 1 dargestellt, ist eine Differenz zwischen einem Drehmoment M, welches bei der im verzögerten Schaltarbeitspunkt SA2 eingestellten Drehzahl n_SA2 maximal erzeugbar ist und dem im verzögerten Schaltarbeitspunkt SA2 erzeugten Drehmoment M_SA2 größer als der Drehmomentvorhalt MV.

Weiter ist dargestellt ist ein Drehzahlbereich n_opt, wobei ein Schaltvorgang nur dann durchgeführt wird, wenn sich die Drehzahl n im verzögerten Schaltarbeitspunkt SA2 in diesem Drehzahlbereich n_opt befindet. Der Drehzahlbereich n_opt ist hierbei der Drehzahlbereich mit minimaler Größe, der die minimale Drehzahl und die maximale Drehzahl gangabhängiger Bereiche 6, 7 optimaler Antriebswirkungsgrade umfasst. Hierbei weist der Antriebsstrang, der die Elektromaschine und das Schaltgetriebe umfasst, im 2. Gang bei Betrieb in Arbeitspunkten, die von dem Bereich 6 optimaler Wirkungsgrade umfasst sind, optimale Antriebswirkungsgrade auf. Entsprechend weist der Antriebsstrang im 3. Gang bei Betrieb in Arbeitspunkten, die von dem Bereich 7 optimaler Wirkungsgrade umfasst sind, optimale Antriebswirkungsgrade auf.

Eine minimale Drehzahl n des Bereichs 6 entspricht hierbei der minimalen Drehzahl n des Bereichs n_opt optimaler Drehzahlen. Eine maximale Drehzahl n des Bereichs 7 entspricht der maximalen Drehzahl n des Bereichs n_opt optimaler Drehzahlen.

Im verzögerten Schaltarbeitspunkt SA2 sind also die vorhergehend angeführten drehmoment- und drehzahlabhängigen Bedingungen erfüllt, so dass in den Zielarbeitspunkt ZA2 geschaltet wird. Der Zielarbeitspunkt ZA2 entspricht hierbei dem weiteren Arbeitspunkt WA1. Das bei der Einleitung des Schaltvorgangs auftretende (nicht dargestellte) Absinken des Raddrehmoments kann hierbei durch eine Erhöhung des von der Elektromaschine erzeugten Drehmoments M kompensiert werden.

Fig. 2a zeigt eine schematische Darstellung eines Drehzahl- und Drehmomentverlauf bei einer Zug-Hochschaltung im Volllastbetrieb einer Elektromaschine eines nicht dargestellten Elektro- oder Hybridfahrzeugs. Hierbei ist eine Drehzahl n über der Zeit t dargestellt.

Vor einer ersten Phase I ist ein Ausgangsgang, z.B. der in Fig. 1 erläuterte 2. Gang, eingelegt und eine Drehzahl n_EM der Elektromaschine entspricht einer Ausgangsdrehzahl n_K1. Ein Ausgangsdrehmoment M_EM der Elektromaschine entspricht dem maximal von der Elektromaschine erzeugbaren Drehmoment M_EM_max.

In einer ersten Phase I erfolgt eine Schaltungsanforderung, wobei in einen Zielgang mit einer kleineren Übersetzungsstufe umgeschaltet werden soll. Der Zielgang kann beispielsweise der in Fig. 1 erläuterte 3. Gang sein. Während der ersten Phase I wird der Zielgang eingelegt, wobei die entsprechende Kupplung bzw. Getriebestufe des Zielgangs eine Drehzahl n_K2 übernimmt, die sich aus Übersetzungsverhältnis des Zielgangs und Fahrzeuggeschwindigkeit ergibt.

In einer Momentenüberführungsphase PII wird das Drehmoment M_EM der Elektromaschine von der Getriebestufe des Ausgangsgang auf die Getriebestufe des Zielgangs überführt. Hierbei tritt aufgrund des kleineren Übersetzungsverhältnis des Zielgangs der vorhergehend erläuterte Momenteneinbruch des Raddrehmoments ein. Da die Elektromaschine im Volllastbetrieb betrieben wird und das maximal erzeugbare Drehmoment M_EM_max erzeugt, kann das Drehmoment M_EM nicht erhöht werden, um diesen Momenteneinbruch zu kompensieren.

In einer Drehzahlüberführungsphase PIII wird die Drehzahl n_EM der Elektromaschine auf die niedrigere Drehzahl n_K2 im Zielgang überführt. Hierbei kann das Drehmoment M_EM der Elektromaschine in der Drehzahlüberführungsphase PIII reduziert werden, da aufgrund der Drehzahlverringerung verfügbare kinetische Energie der Getriebeeingangswelle genutzt werden kann, um zusätzliches Drehmoment an der Getriebeeingangswelle zu erzeugen.

Fig. 2b zeigt eine schematische Darstellung eines Drehzahl- und Drehmomentverlaufs bei einer Zug-Hochschaltung im Teillastbetrieb einer Elektromaschine eines nicht dargestellten Elektro- oder Hybridfahrzeugs. Hierbei ist eine Drehzahl n über der Zeit t dargestellt.

Im Unterschied zum in Fig. 2a dargestellten Verlauf erzeugt die Elektromaschine nicht das maximal erzeugbare Drehmoment M_EM_max sondern ein geringeres Drehmoment M_EM, wobei das maximal erzeugbare Drehmoment M_EM_max gestrichelt dargestellt ist.

Somit kann in der Momentenüberführungsphase PII das Drehmoment M_EM der Elektromaschine erhöht werden. Der sich aufgrund des kleineren Übersetzungsverhältnis des Zielgangs einstellende Momenteneinbruch des Raddrehmoments kann somit kompensiert werden. In Fig. 2b ist dargestellt, dass das Drehmoment M_EM während der Momentenüberführungsphase PII linear auf das maximal erzeugbare Drehmoment M_EM_max erhöht wird. Selbstverständlich sind aber auch andere Verläufe vorstellbar.

### Bezugszeichenliste

- 1: Kennlinie
- 2: Kennlinie
- 3: Verlauf von Arbeitspunkten
- 4: Schaltvorgang
- 5: Schaltvorgang
- 6: Bereich optimaler Antriebswirkungsgrade im 2. Gang
- 7: Bereich optimaler Antriebswirkungsgrade im 3. Gang
- n_opt: Bereich optimaler Drehzahlen
- A: Arbeitspunkt
- AA: Ausgangsarbeitspunkt
- SA1: Schaltarbeitspunkt
- SA2: verzögerter Schaltarbeitspunkt
- ZA1: Zielarbeitspunkt
- ZA2: Zielarbeitspunkt
- WA1: weiterer Arbeitspunkt
- M: Drehmoment
- M_AA: Drehmoment
- n_AA: Drehzahl
- n_ZA1: Drehzahl
- M_WA1: Drehmoment
- n_WA1: Drehzahl
- n: Drehzahl
- M_SA2: Drehmoment
- n_SA2: Drehzahl
- MV: Drehmomentvorhalt
- t: Zeit
- PI: erste Phase
- PII: Momentenüberführungsphase
- PIII: Drehzahlüberführungsphase
- M_K1: Drehmoment im Ausgangsgang
- M_K2: Drehmoment im Zielgang
- n_K1: Drehzahl im Ausgangsgang
- n_K2: Drehzahl im Zielgang
- n_EM: Drehzahl der Elektromaschine
- M_EM: Drehmoment der Elektromaschine
- M_EM_max: maximales Drehmoment der Elektromaschine

## Patentansprüche

1. Verfahren zur Steuerung eines Schaltgetriebes in einem Elektro- oder Hybridfahrzeug, wobei das Schaltgetriebe eingangsseitig mit einer Elektromaschine des Elektro- oder Hybridfahrzeugs gekoppelt ist, wobei das Schaltgetriebe ausgangsseitig mit einer Antriebswelle des Elektro- oder Hybridfahrzeugs gekoppelt ist,
wobei ein gewünschter Schaltvorgang detektiert wird,
wobei ein aktueller Arbeitspunkt der Elektromaschine bestimmt wird, **dadurch gekennzeichnet, dass** der Schaltvorgang nur dann durchgeführt wird, wenn der Arbeitspunkt (A) der Elektromaschine nicht oder nicht mehr in einem Volllastbereich liegt.

2. Verfahren nach Anspruch 1, **dadurch gekennzeichnet, dass** zu Beginn des Schaltvorgangs und/oder während des Schaltvorgangs ein Drehmoment (M) der Elektromaschine verändert wird.

3. Verfahren nach Anspruch 2, **dadurch gekennzeichnet, dass** das Drehmoment (M) der Elektromaschine in Abhängigkeit einer Veränderung eines Abtriebsmoments des Schaltgetriebes verändert wird.

4. Verfahren nach einem der Ansprüche 1 bis 3, **dadurch gekennzeichnet, dass** der Schaltvorgang erst dann durchgeführt wird, wenn die Elektromaschine in einem vorbestimmten Drehzahlbereich (n_opt) betrieben wird.

5. Verfahren nach einem der Ansprüche 1 bis 4, **dadurch gekennzeichnet, dass** der Schaltvorgang erst dann durchgeführt wird, wenn ein Drehmoment (M) der Elektromaschine um mehr als ein vorbestimmtes Maß unterhalb eines maximalen Drehmoments (M) liegt.

6. Verfahren nach einem der Ansprüche 1 bis 5, **dadurch gekennzeichnet, dass** der Schaltvorgang maximal für eine vorbestimmte Zeitdauer und/oder nur unterhalb einer vorbestimmten Maximaldrehzahl unterdrückt wird.

7. Verfahren nach einem der Ansprüche 1 bis 6, **dadurch gekennzeichnet, dass** der Schaltvorgang erst dann durchgeführt wird, wenn ein Wirkungsgrad der Elektromaschine, der sich bei Betrieb mit der zukünftigen Übersetzungsstufe einstellt, um nicht mehr als ein vorbestimmtes Maß von dem Wirkungsgrad der Elektromaschine abweicht, der sich bei Betrieb mit der aktuellen Übersetzungsstufe zum Beginn des Schaltvorgangs einstellt.

8. Verfahren nach einem der Ansprüche 1 bis 7, **dadurch gekennzeichnet, dass** das Verfahren sowohl in einem motorischen Betrieb der Elektromaschine als auch bei einem generatorischen Betrieb der Elektromaschine durchgeführt wird.

9. Vorrichtung zur Steuerung eines Schaltgetriebes in einem Elektro- oder Hybridfahrzeug, wobei das Schaltgetriebe eingangsseitig mit einer Elektromaschine des Elektro- oder Hybridfahrzeugs gekoppelt ist, wobei das Schaltgetriebe ausgangsseitig mit einer Antriebswelle des Elektro- oder Hybridfahrzeugs gekoppelt ist,
wobei die Vorrichtung mindestens ein Mittel zur Detektion eines gewünschten Schaltvorgangs, mindestens ein Mittel zur Betätigung des Schaltgetriebes und mindestens eine Steuer- und Auswerteeinrichtung umfasst,
wobei mittels des Mittels zur Detektion eines gewünschten Schaltvorgangs ein gewünschter Schaltvorgang detektierbar ist, wobei mittels der Steuer- und Auswerteeinrichtung ein aktueller Arbeitspunkt (A) der Elektromaschine bestimmbar ist, **dadurch gekennzeichnet, dass** das mindestens eine Mittel zur Betätigung des Schaltgetriebes nur dann zur Durchführung des Schaltvorgangs angesteuert wird, wenn der Arbeitspunkt der Elektromaschine nicht oder nicht mehr in einem Volllastbereich liegt.

10. Vorrichtung nach Anspruch 9, **dadurch gekennzeichnet, dass** mittels der Steuer- und Auswerteeinrichtung zu Beginn des Schaltvorgangs und/oder während des Schaltvorgangs ein Drehmoment (M) der Elektromaschine veränderbar ist.

## Claims

1. Method for controlling a transmission in an electric vehicle or hybrid vehicle, wherein the transmission is coupled on the input side to an electric machine of the electric vehicle or hybrid vehicle, wherein the transmission is coupled on the output side to a driveshaft of the electric vehicle or hybrid vehicle,
wherein a desired shift operation is detected,
wherein a current operating point of the electric machine is determined, **characterized in that** the shift operation is carried out only when the operating point (A) of the electric machine is not present, or is no longer present, in a full load range.

2. Method according to Claim 1, **characterized in that** a torque (M) of the electric machine is changed at the start of the shift operation and/or during the shift operation.

3. Method according to Claim 2, **characterized in that** the torque (M) of the electric machine is changed as a function of a change in an output torque of the transmission.

4. Method according to one of Claims 1 to 3, **characterized in that** the shift operation is not carried out until the electric machine is operated in a predetermined rotational speed range (n_opt).

5. Method according to one of Claims 1 to 4, **characterized in that** the shift operation is not carried out until a torque (M) of the electric machine is below a maximum torque (M) by more than a predetermined amount.

6. Method according to one of Claims 1 to 5, **characterized in that** the shift operation is suppressed at maximum for a predetermined time period and/or only below a predetermined maximum rotational speed.

7. Method according to one of Claims 1 to 6, **characterized in that** the shift operation is not carried out until an efficiency level of the electric machine which occurs during operation with the future transmission ratio differs by not more than a predetermined amount from the efficiency level of the electric machine which occurs during operation with the current transmission ratio at the start of the shift operation.

8. Method according to one of Claims 1 to 7, **characterized in that** the method is carried out both in a motor mode of the electric machine and in a generator mode of the electric machine.

9. Device for controlling a transmission in an electric vehicle or hybrid vehicle, wherein the transmission is coupled on the input side to an electric machine of the electric vehicle or hybrid vehicle, wherein the transmission is coupled on the output side to a driveshaft of the electric vehicle or hybrid vehicle,
wherein the device comprises at least one means for detecting a desired shift operation, at least one means for activating the transmission and at least one control and evaluation device,
wherein a desired shift operation can be detected by means of the means for detecting a desired shift operation, wherein a current operating point (A) of the electric machine can be determined by means of the control and evaluation device, **characterized in that** the at least one means for activating the transmission is actuated to carry out the shift operation only when the operating point of the electric machine is not present, or is no longer present, in a full load range.

10. Device according to Claim 9, **characterized in that** a torque (M) of the electric machine can be changed by means of the control and evaluation device at the start of the shift operation and/or during the shift operation.

## Revendications

1. Procédé de commande d'une boîte de vitesses dans un véhicule électrique ou hybride, dans lequel la boîte de vitesses est couplée à l'entrée à une machine électrique du véhicule électrique ou hybride, dans lequel la boîte de vitesses est couplée à la sortie à un arbre primaire du véhicule électrique ou hybride, dans lequel on détecte un changement de vitesse désiré, dans lequel on détermine un point de travail actuel de la machine électrique, **caractérisé en ce que** l'on exécute le changement de vitesse uniquement lorsque le point de travail (A) de la machine électrique ne se trouve pas ou plus dans un domaine de pleine charge.

2. Procédé selon la revendication 1, **caractérisé en ce que** l'on fait varier un couple (M) de la machine électrique au commencement du changement de vitesse et/ou pendant le changement de vitesse.

3. Procédé selon la revendication 2, **caractérisé en ce que** l'on fait varier le couple (M) de la machine électrique en fonction d'une variation d'un couple de sortie de la boîte de vitesses.

4. Procédé selon l'une quelconque des revendications 1 à 3, **caractérisé en ce que** l'on n'exécute le changement de vitesse que lorsque la machine électrique fonctionne dans une plage de nombre de tours prédéterminée (n_opt).

5. Procédé selon l'une quelconque des revendications 1 à 4, **caractérisé en ce que** l'on n'exécute le changement de vitesse que lorsqu'un couple (M) de la machine électrique se situe de plus d'une quantité prédéterminée en dessous d'un couple maximal (M).

6. Procédé selon l'une quelconque des revendications 1 à 5, **caractérisé en ce que** l'on supprime le changement de vitesse au maximum pendant une durée prédéterminée et/ou uniquement en dessous d'un nombre de tours maximal prédéterminé.

7. Procédé selon l'une quelconque des revendications 1 à 6, **caractérisé en ce que** l'on n'exécute le changement de vitesse que lorsqu'un rendement de la machine électrique, qui s'établit pour le fonctionnement avec le futur rapport de transmission, ne s'écarte pas de plus d'une quantité prédéterminée du rendement de la machine électrique, qui s'établit pour le fonctionnement avec le rapport de transmission actuel au commencement du changement de vitesse.

8. Procédé selon l'une quelconque des revendications 1 à 7, **caractérisé en ce que** l'on exécute le procédé aussi bien en fonctionnement de la machine électrique en mode moteur qu'en fonctionnement de la machine électrique en mode générateur.

9. Dispositif de commande d'une boîte de vitesses dans un véhicule électrique ou hybride, dans lequel la boîte de vitesses est couplée à l'entrée à une machine électrique du véhicule électrique ou hybride, dans lequel la boîte de vitesses est couplée à la sortie à un arbre primaire du véhicule électrique ou hybride, dans lequel le dispositif comprend au moins un moyen de détection d'un changement de vitesse désiré, au moins un moyen d'actionnement de la boîte de vitesses et au moins un dispositif de commande et d'évaluation, dans lequel un changement de vitesse désiré peut être détecté au moyen du moyen de détection d'un changement de vitesse désiré, dans lequel un point de travail actuel (A) de la machine électrique peut être déterminé au moyen du dispositif de commande et d'évaluation, **caractérisé en ce que** ledit au moins un moyen d'actionnement de la boîte de vitesses n'est commandé pour l'exécution du changement de vitesse que lorsque le point de travail de la machine électrique ne se trouve pas ou plus dans un domaine de pleine charge.

10. Dispositif selon la revendication 9, **caractérisé en ce qu'**un couple (M) de la machine électrique peut être changé au moyen du dispositif de commande et d'évaluation au commencement du changement de vitesse et/ou pendant le changement de vitesse.
